# NOUVEAU FASCICULE DE BREVET EUROPEEN

(11) **EP 1 404 746 B2**
(45) Date de publication et mention de la décision concernant l'opposition: **10.11.2010**
(45) Mention de la délivrance du brevet: 27.07.2005
(21) Numéro de dépôt: 02759824.2
(22) Date de dépôt: 09.04.2002
(51) Int. Cl.: C08J 7/14, C23C 18/24

(54) **PRE-TRAITEMENT DES MATIERES PLASTIQUES**
VORBEHANDLUNG VON KUNSTSTOFFMATERIALIEN
PRE-TREATMENT OF PLASTIC MATERIALS

(30) Priorité: 09.04.2001 FR 0104781
(43) Date de publication de la demande: 07.04.2004
(73) Titulaire: Coventya, 92110 Clichy (FR)
(72) Inventeur: Coventya, 92110 Clichy (FR)
(74) Mandataire: Eidelsberg, Victor Albert
(86) Numéro de dépôt international: PCT/FR2002/001226
(87) Numéro de publication internationale: WO 2002/081554

(56) Documents cités:
- US-A- 3 672 940
- US-A- 4 448 811
- US-A- 4 940 608
- DATABASE WPI Section Ch, Week 198651 Derwent Publications Ltd., London, GB; Class A17, AN 1986-336169 XP002207726 & JP 61 252236 A (NIPPON SENSOR KK), 10 novembre 1986 (1986-11-10)
- DATABASE WPI Section Ch, Week 197601 Derwent Publications Ltd., London, GB; Class A35, AN 1976-00890X XP002207727 & JP 50 075269 A (TOHEI MEKKI KK), 20 juin 1975 (1975-06-20)
- DATABASE WPI Section Ch, Week 198630 Derwent Publications Ltd., London, GB; Class A23, AN 1986-192233 XP002207725 & JP 61 123536 A (TORAY IND INC), 11 juin 1986 (1986-06-11)
- PATENT ABSTRACTS OF JAPAN vol. 1995, no. 01, 28 février 1995 (1995-02-28) & JP 06 279609 A (MITSUBISHI PETROCHEM CO LTD), 4 octobre 1994 (1994-10-04)
- PATENT ABSTRACTS OF JAPAN vol. 008, no. 130 (C-229), 16 juin 1984 (1984-06-16) & JP 59 043036 A (MITSUBISHI RAYON KK), 9 mars 1984 (1984-03-09)
- PATENT ABSTRACTS OF JAPAN vol. 004, no. 124 (C-023), 2 septembre 1980 (1980-09-02) & JP 55 080438 A (OLYMPUS OPTICAL CO LTD), 17 juin 1980 (1980-06-17)
- DATABASE WPI Section Ch, Week 198341 Derwent Publications Ltd., London, GB; Class A23, AN 1983-786728 XP002207728 & JP 58 149924 A (CANON KK), 6 septembre 1983 (1983-09-06)
- PATENT ABSTRACTS OF JAPAN vol. 014, no. 544 (C-0784), 4 décembre 1990 (1990-12-04) & JP 02 232237 A (KIZAI KK), 14 septembre 1990 (1990-09-14)
- 'Ulmans Encyclopädie der Technischen Chemie', vol. 4, partie 17 1979 pages 509 - 512
- HOLLEMAN-WIBEY: 'LEHRBUCH ANORGANISCHEN CHEMIE', 1985 page 1203
- CRALNANOTECHNIK vol. 59, no. 1, 1968, pages 32 - 36

## Description

La présente invention a pour objet un procédé d'attaque chimique (etching) de surfaces de matière plastique destinées à être revêtues d'un dépôt métallique ou non.

La présente invention concerne le domaine des revêtements de pièces généralement en matière plastique, en particulier les revêtements métalliques utilisés à titre de revêtements techniques ou décoratifs.

Ce type de pièces métallisées est tout particulièrement recherché dans l'industrie automobile, l'industrie du sanitaire et de l'accessoire de salle de bain, dans les industries de la cosmétique et de la parfumerie. Par ailleurs, ces types de revêtement sont tout particulièrement utiles pour les applications visant à mettre à profit la conductibilité des métaux et l'isolation des matières plastiques, notamment dans les domaines de la télécommunication et de l'électronique. La métallisation des matières plastiques en continu est en générale réalisée par électrolyse en milieu aqueux après conditionnement chimique de la surface dans sa totalité par oxydation ou dissolution chimique, ce qui permet de créer une surface microporeuse hydrophile. Le conditionnement chimique de la surface est en général réalisé par des formules ou des compositions de satinage (*etching formulations*) contenant au moins de l'anhydride chromique et de l'acide sulfurique, éventuellement associés à de l'acide phosphorique et à des tensio-actifs fluorés.

Ces compositions très largement utilisées aujourd'hui présentent des inconvénients majeurs sur le plan de l'écologie, de la sécurité et de la destruction des rejets.

En effet, elles contiennent des concentrations en acide chromique comprises entre 380 g/l et 450 g/l, lequel doit être éliminé dans les différents processus industriels, or ce produit est particulièrement dangereux pour l'environnement et la santé humaine.

Toutefois, jusqu'à ce jour, ce composé s'est avéré indispensable dans l'attaque des matières plastiques car il permet de créer des microrugosités nécessaires à l'ancrage de la catalysation et des dépôts métalliques successifs.

Plusieurs tentatives ont été réalisées pour réduire la concentration en anhydride chromique dans ces compositions de satinage, mais aucune de ces compositions n'a permis d'apporter des résultats satisfaisants, notamment parce qu'elles créent des défauts sur la surface des matières plastiques traitées. D'autres compositions de substitution qui ont été proposées présentent comme inconvénient majeur de métalliser les supports à base de plastisol qui portent les pièces à traiter. Le remplacement éventuel de ces plastisols par des revêtements fluorés nécessiterait un investissement très élevé de la part des industriels ainsi que la mise au point d'un nouveau procédé de traitement des matières plastiques.

Aussi la mise au point d'un procédé d'attaque chimique permettant d'éviter ces inconvénients serait très appréciée.

Or l'inventeur a trouvé de manière très surprenante qu'il était possible de réaliser ce traitement chimique des surfaces en diminuant les concentrations en acide chromique tout en obtenant des surfaces sans défaut permettant une bonne adhésion des revêtements qui y sont appliqués.

En conséquence, la présente invention a pour objet un procédé d'attaque chimique de la surface d'une matière plastique par une solution d'acide sulfurique et d'anhydride chromique, caractérisé en ce que:
i) la concentration en acide sulfurique est comprise entre 500 et 760 g/l,
ii) la concentration en anhydride chromique est comprise entre 30 et 200 g/l, avantageusement entre 30 et 150 g/l,
iii) l'acidité résultante est au moins égale à 13 et au plus égale à 16 et
iv) la solution comprend en outre du pentoxyde de vanadium, présent en une concentration comprise entre 0,1 et 100 g/l, avantageusement entre 0,1 et 1g/l.

On entend par acidité résultante au sens de la présente invention, l'acidité calculée pour 1 ml de bain titré avec NaOH N/1; soit:
(A) la détermination de la concentration en acide chromique (CrO₃) exprimé en g/l,
(B) la détermination de la concentration en acide sulfurique (H₂SO₄) exprimé en g/l,
on appelle x = A x 0,02 et y = B/49, alors l'acidité totale calculée est égale à (x + y). L'acidité calculée est sensiblement égale à l'acidité mesurée ± 0,5, l'acidité mesurée variant selon le pH choisi au point de virage.

Dans un mode particulier de réalisation de l'invention, la concentration en acide sulfurique est comprise entre 500 et 600 g/l et la concentration en anhydride chromique est comprise entre 60 et 150 g/l.

A titre représentatif des matières plastiques qui peuvent être soumises au procédé de traitement selon l'invention, on peut citer notamment les matières plastiques transformées par moulage par injection comme les ABS (acrylo-nitrile-butadiène-styrène), les alliages d'ABS/PC (acrylo-nitrile-butadiène-styrène/polycarbonate), les P.P.E (polyphénylène éther), les P.P.O (polyphénylène oxyde), les polypropylènes, les polyamides ainsi que toutes les matières plastiques habituellement métallisables.

Dans le cadre du procédé de l'invention, le traitement est réalisé à des températures conventionnellement utilisées, notamment à des températures de 65 à 70°C pour les ABS et de 69 à 72°C pour les polypropylènes et les ABS/PC. Les durées de traitement également conventionnelles sont de préférence comprises entre 8 et 12 minutes pour les ABS et entre 9 à 15 minutes pour les polypropylènes et les ABS/PC.

On utilise l'acide sulfurique, notamment des solutions de pentoxyde de vanadium de 0,1 g/l à 200 g/l dans l'acide sulfurique.

Dans la gamme de concentration en anhydride chromique et en acide sulfurique utilisée dans le procédé selon l'invention, le titre total d'acidité exprimé en ml d'hydroxyde de sodium, doit être compris entre 13 et 16. La limite d'acidité est déterminée par la limite de concentration en acide sulfurique.

Pour les bains conventionnels, au delà d'une concentration de 450 g/l d'acide sulfurique, des phénomènes de précipitation d'acide chromique apparaissent dans les bains de satinage, ce qui rend de telles formules peu commode en production. A une valeur inférieure, le satinage des matières plastiques, notamment celui des ABS est insuffisant et ne permet pas d'envisager une production de qualité; en effet, les réactions d'oxydo-réduction au sein de ces compositions de satinage en contact avec les matières plastiques réduisent l'efficacité et la stabilité des bains rendant toute production aléatoire, voire impossible.

Selon le procédé de l'invention, les concentrations en anhydride chromique sont inférieures de 15 à 3 fois aux valeurs classiquement utilisées alors que les valeurs en acide sulfurique sont seulement de 1,1 à 2 fois supérieures aux valeurs couramment utilisées dans les procédés antérieures de la technique.

Les bains, selon l'invention, ne présentent pas les inconvénients énumérés précédemment pour les bains conventionnels.

L'invention a également pour objet une solution utilisable pour attaquer la surface d'une matière plastique, ladite solution comprenant
(i) de l'acide sulfurique à une concentration comprise entre 500 et 760 g/l,
(ii) de l'anhydride chromique à une concentration comprise entre 30 et 200 g/l, avantageusement comprise entre 30 et 150 g/l, et dont
(iii) l'acidité résultante est au moins égale à 13 et au plus égale à 16,
(iv) la solution comprend en outre du pentoxyde de vanadium, présent en une concentration comprise entre 0,1 et 100 g/l, avantageusement entre 0,1 et 1g/l.
et/ou un tensio-actif fluoré du type perfluoro-alkyl-sulfonate de lithium ou de potassium ou d'amine. Toutefois, la viscosité des satinages obtenus par ce procédé peut rendre inutile l'emploi de tels tensio-actifs fluorés.

L'invention a aussi pour objet une pièce en ABS traitée par le procédé selon l'invention qui présente une surface caractéristique et distincte de celle obtenue par in pré-traitement conventionnel et qui présente deux nodes de gravure, à savoir l'oxydation/gravure de la partie butadiène avec création de micropores provoqués par l'acide chromique et la gravure en forme d'un réseau radiculaire reliant les micropores dus à l'oxydation provoquée par l'action corrosive de l'acide sulfurique. Les exemples qui suivent illustrent l'invention sans toutefois la limiter:

### Exemple N°1: Formulation pour le traitement des ABS, des alliages ABS/PC, des PPE et des polyamides

| | |
|---|---|
| Anhydride chromique | 60 ± 20 g/l |
| Acide sulfurique | 650 ± 30 g/l |
| Catalyseur (V₂O₅) | 0,5 à 1 g/l |
| Tensio-actif fluoré | 2 à 5 ml/l, soit 0,1 à 0,5 g/l |

L'acidité calculée est la suivante:
Acidité moyenne calculée = 14,465
Acidité minimum calculée = 13,45
Acidité maximum calculée = 15,48

### Exemple N°2: Formulation pour le traitement des ABS, des alliages ABS/PC, des PPE et des Polyamides

| | |
|---|---|
| Anhydride chromique | 100 ± 20 g/l |
| Acide sulfurique | 650 ± 30 g/l |
| Catalyseur (V₂O₅) | 0,5 à 1 g/l |
| Tensioactif fluoré | 2 à 5 ml/l, soit 0,1 à 0,5 g/l |

L'acidité calculée est la suivante:
Acidité moyenne calculée = 15,265
Acidité minimum calculée = 14,25
Acidité maximum calculée = 16,28

### Exemple N° 3: Formulation pour le traitement des polypropylènes destinés à être chromés.

| | |
|---|---|
| Anhydride chromique | 150 ± 20 g/l |
| Acide sulfurique | 625 ± 30 g/l |
| Catalyseur (V₂O₅) | 0,5 à 1 g/ l |
| Tensioactif fluoré | 2 à 5 ml/l, soit 0,1 à 0,5 g/l |

L'acidité calculée est la suivante:
Acidité moyenne calculée = 15,75
Acidité minimum calculée = 14,74
Acidité maximum calculée = 16,77

### Exemple N°4: Formulation pour le traitement des ABS, des alliages ABS/PC, des PPE et des polyamides.

| | |
|---|---|
| Anhydride chromique | 40 ± 10 g/l |
| Acide sulfurique | 730 ± 30 g/l |
| Catalyseur (V₂O₅) ou | 0,5 à 10 g/l |
| catalyseur (MoO3) | 0,5 à 10 g/l |
| tensioactif fluoré | 2 à 5 ml/l, soit 0,1 à 5,0 g/l |

L'acidité calculée est la suivante:
Acidité moyenne calculée = 15,70
Acidité minimum calculée = 14,70
Acidité maximum calculée = 16,70

Le procédé selon l'invention permet d'obtenir après métallisation un bon aspect de surface, l'adhérence des dépôts métalliques, la tenue aux chocs thermiques, au vieillissement et à la corrosion des produits.

## Revendications

1. Procédé d'attaque chimique de la surface d'une matière plastique par une solution à base d'acide sulfurique et d'anhydride chromique, **caractérisé en ce que** :
(i) la concentration en acide sulfurique est comprise entre 500 et 760 g/l,
(ii) la concentration en anhydride chromique est comprise entre 30 et 200 g/l, avantageusement entre 30 et 150 g/l,
(iii) l'acidité résultante est au moins égale à 13 et au plus égale à 16, et **en ce que**
(iv) la solution comprend en outre du pentoxyde de vanadium à une concentration comprise entre 0,1 et 100 g/l, avantageusement entre 0,1 et 1 g/l.

2. Procédé selon la revendication 1, **caractérisé en ce que** la concentration en acide sulfurique est comprise entre 500 et 600 g/l et la concentration en anhydride chromique est comprise entre 60 et 150 g/l.

3. Procédé selon l'une quelconque des revendications 1 ou 2, **caractérisé en ce que** le pentoxyde de vanadium est ajouté sous forme d'une solution dans un acide minéral fort.

4. Procédé selon les revendications 1 à 3, **caractérisé en ce que** le pentoxyde de vanadium est en solution dans l'acide sulfurique.

5. Procédé d'attaque chimique de la surface d'une matière plastique selon l'une quelconque des revendications 1 à 4, **caractérisé en ce que** la matière plastique est choisie dans le groupe constitué par l'ABS, les polypropylènes, les polyamides, les P.P.O., les ABS/PC et les P.P.E.

6. Solution à base d'acide sulfurique et d'anhydride chromique, **caractérisée en ce que** :
(i) la concentration en acide sulfurique est comprise entre 500 et 760 g/l,
(ii) la concentration en anhydride chromique est comprise entre 30 et 200 g/l, avantageusement entre 30 et 150 g/l,
(iii) l'acidité résultante est au moins égale à 13 et au plus égale à 16, et **en ce que**
(iv) la solution comprend en outre du pentoxyde de vanadium à une concentration comprise entre 0,1 et 100 g/l, avantageusement entre 0,1 et 1 g/l,
et contenant éventuellement un tensioactif fluoré.

7. Pièce moulée en ABS, **caractérisée en ce qu'**elle a été soumise à un satinage par un procédé selon l'une quelconque des revendications 1 à 5 avant sa métallisation.

## Claims

1. Method of chemically etching the surface of a plastic material using a solution based on sulphuric acid and chromic anhydride, **characterised in that**:
(i) the sulphuric acid concentration is between 500 and 760 g/l,
(ii) the chromic anhydride concentration is between 30 and 200 g/l, advantageously between 30 and 150 g/I,
(iii) the resulting acidity is at least 13 and at most 16, and **in that**
(iv) the solution comprises, in addition, vanadium pentoxide at a concentration of between 0.1 and 100 g/l, advantageously between 0.1 and 1 g/l.

2. Method according to claim 1, **characterised in that** the sulphuric acid concentration is between 500 and 600 g/l and the chromic anhydride concentration is between 60 and 150 g/l.

3. Method according to any one of claims 1 or 2, **characterised in that** the vanadium pentoxide is added in the form of a solution into a strong mineral acid.

4. Method according to claims 1 to 3, **characterised in that** the vanadium pentoxide is in solution in the sulphuric acid.

5. Method of chemically etching the surface of a plastic material according to any one of claims 1 to 4, **characterised in that** the plastic material is chosen from the group consisting of ABS, polypropylenes, polyamides, PPO, ABS/PC and PPE.

6. Solution based on sulphuric acid and chromic anhydride, **characterised in that**:
(i) the concentration of sulphuric acid is between 500 and 760 g/l,
(ii) the concentration of chromic anhydride is between 30 and 200 g/l, advantageously between 30 and 150 g/l,
(iii) the resulting acidity is at least 13 and at most 16, and **in that**
(iv) the solution comprises, in addition, vanadium pentoxide at a concentration of between 0.1 and 100 g/l, advantageously between 0.1 and 1 g/l
and optionally containing a fluorinated surfactant.

7. Moulded part made of ABS, **characterised in that** it has undergone satining using a method according to any one of claims 1 to 5 before its metallisation.

## Patentansprüche

1. Verfahren zum chemischen Ätzen der Oberfläche eines Kunststoffmaterials durch eine Lösung auf der Basis von Schwefelsäure und Chromsäureanhydrid, **dadurch gekennzeichnet, dass**:
(i) die Schwefelsäurekonzentration zwischen 500 und 760 g/l liegt,
(ii) die Chromsäureanhydridkonzentration zwischen 30 und 200 g/l, vorteilhafter Weise zwischen 30 und 150 g/l liegt,
(iii) der resultierende Säuregrad mindestens gleich 13 und höchstens gleich 16 ist und **dadurch**, dass
(iv) die Lösung ferner Vanadium pentoxide mit einer Konzentration zwischen 0,1 und 100g/l, vorteilhafter Weise zwischen 0,1 und 1 g/l, umfasst.

2. Verfahren nach Anspruch 1, **dadurch gekennzeichnet, dass** die Schwefelsäurekonzentration zwischen 500 und 600 g/l und die Chromsäureanhydridkonzentration zwischen 60 und 150 g/l liegt.

3. Verfahren nach einem der Ansprüche 1 oder 2, **dadurch gekennzeichnet, dass** der Vanadium pentoxide in Form einer Lösung in einer starken Mineralsäure beigemengt wird.

4. Verfahren nach einem der Ansprüche 1 bis 3, **dadurch gekennzeichnet, dass** das Vanadiumpentoxid oder das Molybdänsäureanhydrid in der Schwefelsäure in Lösung vorhanden sind.

5. Verfahren zum chemischen Ätzen der Oberfläche eines Kunststoffmaterials nach einem der Ansprüche 1 bis 4, **dadurch gekennzeichnet, dass** das Kunststoffmaterial aus der Gruppe ausgewählt ist, die aus ABS, Polypropylenen, Polyamiden, P.P.O., ABS/PC und P.P.E besteht.

6. Lösung auf der Basis von Schwefelsäure und Chromsäureanhydrid, **dadurch gekennzeichnet, dass**:
(i) die Schwefelsäurekonzentration zwischen 500 und 760 g/l liegt,
(ii) die Chromsäureanhydridkonzentration zwischen 30 und 200 g/l, vorteilhafter Weise zwischen 30 und 150 g/l liegt,
(iii) der resultierende Säuregrad mindestens gleich 13 und höchstens gleich 16 ist und **dadurch**, dass
(iv) die Lösung ferner einen Vanadium pentoxide mit einer Konzentration zwischen 0,1 und 100g/l, vorteilhafter Weise zwischen 0,1 und 1 g/l, umfasst,
und eventuell ein fluoriertes Tensid enthält.

7. Geformtes Teil aus ABS, **dadurch gekennzeichnet, dass** es vor seiner Metallisierung einer Satinierung durch ein Verfahren nach einem der Ansprüche 1 bis 5 unterzogen wurde.
